# DEMANDE DE BREVET EUROPEEN

(11) **EP 3 926 413 A1**
(43) Date de publication de la demande: **22.12.2021**
(21) Numéro de dépôt: 20180566.0
(22) Date de dépôt: 17.06.2020
(51) Int. Cl.: G04B 19/10, G04B 19/12

(54) **FORMATION D'UN OBJET TRIDIMENSIONNEL SUR UN CADRAN**

(71) Demandeur: Rubattel et Weyermann S.A., 2300 La Chaux-de-Fonds (CH)
(72) Inventeur: JEANRENAUD, M. Frédéric, 2300 La Chaux-de-Fonds (CH); FRITZ, Pierre, 1585 Bellerive (CH)
(74) Mandataire: ICB SA

(57) **Abrégé**

La présente invention concerne un procédé de dépôt (500) pour la formation d'un objet (220) tridimensionnelle sur un cadran et/ou une lunette de montre. Ledit procédé de dépôt (500) comprenant au moins la fourniture (510) d'au moins un support (210), le dépôt (520) d'une couche d'accroché (120).

Une délimitation (530) d'un contour (229) dudit objet (220) est réalisée afin de permettre la formation (540) d'une cavité (225) par dépôt d'une pluralité de couches polymères (130) de sorte à former ledit objet (220) par remplissage (550) de ladite cavité (225) par dépôt (520) d'au moins une couche de finition (140).

## Description

### Domaine technique

La présente invention concerne un procédé de formation d'un objet. Plus particulièrement, la présente invention concerne un procédé de dépôt de couches pour la formation d'un objet tridimensionnel pour un cadran de montre.

### Arrière-plan technologique

Dans l'état de la technique, il existe plusieurs techniques permettant de réaliser des motifs sur un substrat. Toutefois, ces techniques ne permettent pas de réaliser un objet comprenant une contre-dépouille.

En effet, les procédés actuels utilisent un faisceau de lumière directionnel pour créer des motifs dont la section, c'est-à-dire la coupe transversale est rectangulaire ou de type polygonal tel un trapèze ou un losange.

Des formes plus complexes ne sont actuelles pas possibles avec ces procédés actuels, par exemple, il n'est pas possible de créer des contours arrondis voire des surfaces courbes.

### Résumé de l'invention

La présente invention se propose de résoudre totalement ou partiellement ces inconvénients par d'un procédé de dépôt pour la formation d'un objet, de préférence pour une montre ; ledit objet comportant un périmètre, au moins une première surface et/ou un volume ; ledit procédé de dépôt comprenant au moins un ou une :
- Fourniture d'au moins un support comprenant au moins une surface de réception ;
- Dépôt d'une couche d'accroché sur ladite au moins une surface de réception ;
- Délimitation d'un contour sur ladite couche d'accroché déposée ; ledit contour correspondant audit périmètre, à ladite au moins une première surface et/ou audit volume dudit objet ;
- Formation d'une cavité selon ledit contour par dépôt d'une pluralité de couches polymères sur ladite couche d'accroché de sorte qu'une portion de ladite couche d'accroché équivalant audit périmètre, à ladite au moins une première surface et/ou audit volume dudit objet soit en regard, de préférence libre ;
- Remplissage de ladite cavité par dépôt d'au moins une couche de finition sur ladite portion de ladite couche d'accroche en regard, de préférence libre ; et,
- Traitement de surface de ladite pluralité de couches polymères et de ladite couche d'accroche déposée de sorte à découvrir ladite au moins une surface de réception dudit support.

Grâce à cette disposition, il est possible de créer des objets avec des formes complexes tel des contours arrondis ou des surfaces courbes.

Selon un mode de réalisation, ledit objet comprend au moins une deuxième surface plus courbée que ladite au moins une première surface.

Grâce à cette disposition, il est possible de créer des objets avec des formes complexes tel des surfaces courbes.

Selon un mode de réalisation, ladite cavité est formée selon une médiane dudit objet et/ou ledit contour est formée selon une médiane dudit objet.

Selon un mode de réalisation, ladite médiane forme un angle avec ladite au moins une surface de réception.

Selon un mode de réalisation, ledit objet forme une contre-dépouille dans ladite pluralité de couches polymères ou ledit objet comprend une contre-dépouille (224).

Grâce à l'une ou l'autre de ces dispositions précédentes, il est possible de créer des objets avec des formes complexes ayant une contre-dépouille.

Selon un mode de réalisation, ladite formation de ladite cavité est réalisée par impression additive.

Grâce à l'une ou l'autre de ces dispositions précédentes, il est possible de créer des objets avec des formes complexes ayant une contre-dépouille.

Selon un mode de réalisation, ladite d'une couche d'accroche comprend au moins un matériau parmi Au, Cu, Ag, In, Pt Pd Ni, Ti, Ta, Cr, Th ou un alliage de ces matériaux.

Selon un mode de réalisation, ladite au moins une couche de finition comprend au moins un matériau parmi ou un alliage de ces matériaux.

Grâce à ces matériaux, il est possible de réaliser des formes complexes par impression additive.

Selon un mode de réalisation, ledit traitement de surface est réalisé par décapage et/ou stripage.

Grâce à cette disposition, ladite au moins une surface de réception dudit support a un meilleur rendu visuel.

Selon un mode de réalisation, ledit support est en céramique.

Selon un mode de réalisation, ledit dépôt de ladite couche d'accroche est réalisé au contact de ladite au moins une surface de réception.

Grâce à cette disposition, ladite au moins une surface de réception est rendue électriquement conductrice.

La présente invention concerne une montre comprenant au moins un support et un objet réalisé selon ledit procédé de dépôt de ladite présente invention.

Selon un mode de réalisation, ledit au moins un support est un cadran ou une lunette.

### Brève description des figures

L'invention sera décrite ci-après de manière plus détaillée à l'aide des dessins annexés, donnés à titre d'exemples nullement limitatifs, dans lesquels :
- La figure 1 présente un procédé de dépôt **500** selon l'invention ;
- Les figures 2 et 3 illustrent des exemples d'objets ayant une contre-dépouille **224** et/ou une surface courbe, et,
- La figure 4 expose un exemple de cadran de montre réalisé selon ledit procédé de dépôt **500.**

### Description détaillée de l'invention

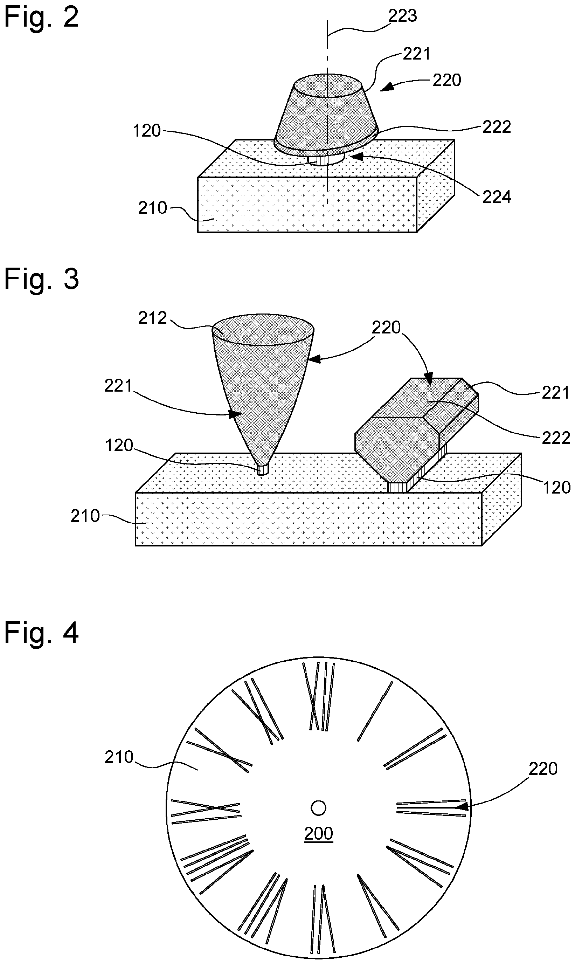

Les figures 2 et 3 présentent différents objets dits complexes de par leurs géométries. En effet, ces objets arborent au moins une surface courbe et ont une contre-dépouille **224** ce qui complexifient la réplication de ces formes à une échelle industrielle.

En effet, la plupart des procédés actuels utilisent un faisceau de lumière directionnel pour créer des motifs avec une section rectangulaire.

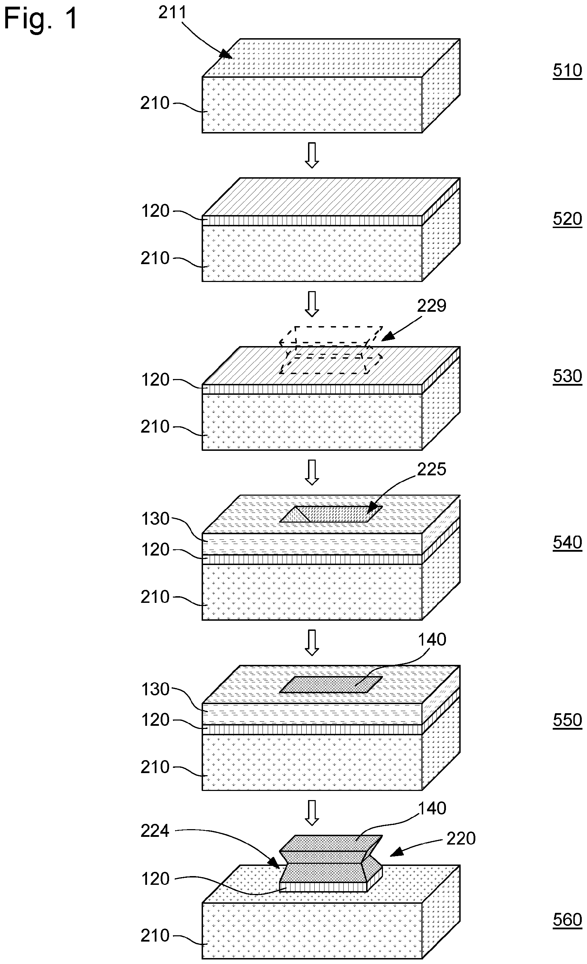

Or, des surfaces courbées ont rendu visuel très appréciées des utilisateurs. À cet effet, la demanderesse propose un procédé de dépôt **500,** visible sur la figure 1, pour la formation d'un objet **220** sur au moins un support **210,** de préférence en céramique, qui peut prendre la forme d'un cadran **210** de montre ou d'une lunette **210** de montre.

Ledit objet **220** peut comporter un périmètre, au moins une première surface **221,** au moins une deuxième surface **222** plus courbée que ladite au moins une première surface **221** comme cela est visible sur la figure 2 et 3, et/ou un volume.

Dans un premier temps, il convient de fournir **510** ledit au moins un support **210** comprenant au moins une surface de réception **211.** S'ensuit le dépôt **520** d'une couche d'accroche **120,** pouvant être composée d'une ou plusieurs couches par voie sèche comme le PVD, CVD ou PE CVD ou ALD, d'au moins un matériau parmi Au, Cu, Ag, In, Pt Pd Ni, Ti, Ta, Cr, Th ou un alliage de ces matériaux, sur ladite au moins une surface de réception **211,** de préférence au contact de ladite au moins une surface de réception **211** de sorte à rendre ladite au moins une surface de réception **211** électriquement conductrice.

Une délimitation **530** est effectuée pour déterminer un contour **229** dudit objet **220** sur ladite couche d'accroche **120** déposée. Ledit contour **229** correspond audit périmètre, à ladite au moins une première surface **221,** à ladite au moins une deuxième surface **222** et/ou audit volume dudit objet **220.** Comme cela est observable sur l'ensemble des objets **220** montrés sur les figures 1 à 4, une contre-dépouille **224** est présente. Ladite contre-dépouille **224,** pouvant être positive ou négative, n'est pas réalisable avec les procédés actuels puisque la source de lumière est directive est ne permet pas de réaliser des objets avec contre-dépouille et plus particulièrement sur des cadrans de montre par exemple.

Ladite délimitation **530** dudit contour **229** est essentielle pour la formation **540** d'une cavité **225** selon ledit contour **229** et, de préférence, selon une médiane **223** dudit objet **220.** Bien que les objets **220** présentent une médiane perpendiculaire à ladite au moins une surface de réception **211,** il se peut que dans des modes de réalisations, ladite médiane **223** forme un angle avec ladite au moins une surface de réception **211.**

Ladite cavité **225** est formée **540** par dépôt d'une pluralité de couches polymères **130** par impression additive sur ladite couche d'accroche **120** de sorte qu'une portion de ladite couche d'accroche **120** équivalant audit périmètre, à ladite au moins une première surface **221** et/ou audit volume dudit objet **220** soit en regard, de préférence libre. Autrement dit, ladite portion de ladite couche d'accroche **120** n'est pas recouverte de couches polymères **130.**

Ladite cavité **225,** sur ladite portion de ladite couche d'accroche **120** en regard, de préférence libre, est remplie par dépôt **520** d'au moins une couche de finition **140** comprenant au moins un matériau parmi ou un alliage de ces matériaux. Ces matériaux sont sélectionnés car ils permettent de réaliser des formes complexes par impression additive.

Afin de rendre un rendu optimal, un traitement de surface **560,** pouvant être réalisé, par décapage et/ou stripage par exemple, sur ladite pluralité de couches polymères **130** et sur ladite couche d'accroche **120** déposée de sorte à découvrir ladite au moins une surface de réception **211** dudit support **210** et à donner un meilleur rendu visuel à ladite au moins une surface de réception **211** dudit support **210.** Dans les cas où la surface supérieure est ladite au moins une deuxième surface **222,** cette dernière, c'est-à-dire ladite au moins une deuxième surface **222** sera recouverte de couches polymères **130,** et ledit traitement de surface **560** retira ladite pluralité de couches polymères **130** présente sur ladite surface supérieure sans endommager le rendu visuel de ladite au moins une deuxième surface **222.**

Dès lors, grâce à cette invention, il est possible de créer des objets avec des formes complexes tel des contours arrondis ou des surfaces courbes et donc des cadrans **210** de montre et/ou des lunettes **210** de montres ayant un rendu visuel inédit et très appréciable.

## Revendications

1. Procédé de dépôt (500) pour la formation d'un objet (220), de préférence pour une montre ; ledit objet (220) comportant un périmètre, au moins une première surface (221) et/ou un volume ; ledit procédé de dépôt (500) comprenant au moins un ou une :
- Fourniture (510) d'au moins un support (210) comprenant au moins une surface de réception (211) ;
- Dépôt (520) d'une couche d'accroche (120) sur ladite au moins une surface de réception (211) ;
- Délimitation (530) d'un contour (229) sur ladite couche d'accroche (120) déposée; ledit contour (229) correspondant audit périmètre, à ladite au moins une première surface (221) et/ou audit volume dudit objet (220) ;
- Formation (540) d'une cavité (225) selon ledit contour (229) par dépôt d'une pluralité de couches polymères (130) sur ladite couche d'accroche (120) de sorte qu'une portion de ladite couche d'accroche (120) équivalant audit périmètre, à ladite au moins une première surface (221) et/ou audit volume dudit objet (220) soit en regard, de préférence libre ;
- Remplissage (550) de ladite cavité (225) par dépôt (520) d'au moins une couche de finition (140) sur ladite portion de ladite couche d'accroche (120) en regard, de préférence libre ; et,
- Traitement de surface (560) de ladite pluralité de couches polymères (130) et de ladite couche d'accroche (120) déposée de sorte à découvrir ladite au moins une surface de réception (211) dudit support (210).

2. Procédé de dépôt (500) selon la revendication 1, dans lequel ledit objet (220) comprend au moins une deuxième surface (222) plus courbée que ladite au moins une première surface (221).

3. Procédé de dépôt (500) selon la revendication 1 ou 2, dans lequel ladite cavité (225) est formée selon une médiane (223) dudit objet (220) et/ou ledit contour (229) est formée selon une médiane (223) dudit objet (220).

4. Procédé de dépôt (500) selon la revendication 3, dans lequel ladite médiane (223) forme un angle avec ladite au moins une surface de réception (211).

5. Procédé de dépôt (500) selon l'une quelconque des revendications précédentes, dans lequel ledit objet (220) forme une contre-dépouille (224) dans ladite pluralité de couches polymères (130) ou ledit objet (220) comprend une contre-dépouille (224).

6. Procédé de dépôt (500) selon l'une quelconque des revendications précédentes, dans lequel ladite formation (540) de ladite cavité (225) est réalisée par impression additive.

7. Procédé de dépôt (500) selon l'une quelconque des revendications précédentes, dans lequel ladite d'une couche d'accroche (120) comprend au moins un matériau parmi Au, Cu, Ag, In, Pt Pd Ni, Ti, Ta, Cr, Th ou un alliage de ces matériaux.

8. Procédé de dépôt (500) selon l'une quelconque des revendications précédentes, dans lequel ladite au moins une couche de finition (140) comprend au moins un matériau parmi Au, Pt, Ag, Cr, Pd ou un alliage de ces matériaux.

9. Procédé de dépôt (500) selon l'une quelconque des revendications précédentes, dans lequel ledit traitement de surface (560) est réalisé par décapage et/ou stripage.

10. Procédé de dépôt (500) selon l'une quelconque des revendications précédentes, dans lequel ledit support (210) est en céramique.

11. Procédé de dépôt (500) selon l'une quelconque des revendications précédentes, dans lequel ledit dépôt (520) de ladite couche d'accroche (120) est réalisé au contact de ladite au moins une surface de réception (211).

12. Montre comprenant au moins un support (210) et un objet (220) réalisé selon l'une quelconque des revendications précédentes dudit procédé de dépôt (500).

13. Montre selon la revendication 12, dans lequel ledit au moins un support (210) est un cadran ou une lunette.
